# EUROPEAN PATENT APPLICATION

(11) **EP 1 536 361 A1**
(43) Date of publication of application: **01.06.2005**
(21) Application number: 04026264.4
(22) Date of filing: 05.11.2004
(51) Int. Cl.: G06F 17/60, G06F 9/44

(54) **Web based CRM service using on-line presence information**

(30) Priority: 25.11.2003 US 721558
(71) Applicant: ALCATEL, 75008 Paris (FR)
(72) Inventor: Timucin, Ozugur, Garland, TX 75042 (US); Aziz, Mohammed, Plano, TX 75024 (US)
(74) Representative: Dreiss, Fuhlendorf, Steimle & Becker

(57) **Abstract**

A system for providing customer assistance to Internet users is provided by the present invention. The invention includes an online customer support server that connects a group of customer support representatives to user of a web site to provide real time customer support. An enterprise server collects presence information from the customer support server regarding the current availability of the customer support representatives, wherein the presence information is updated at regular, specified intervals by means of SIP Publish messages. A web server provides content to the web site, which includes the presence information provided by the enterprise server, allowing online users to see in the current availability of real time customer support. If customer support representatives are not currently available, the invention provides an approximate waiting time. In one embodiment, customers may specifically request service representatives that possess a specific skill set.

## Description

### BACKGROUND OF THE INVENTION

The present invention relates to a system that provides real-time human assisted support for an on-line shopper. More importantly, it is a system that allows the user to have information on the presence of that human support.

Over 70% of on-line shoppers who encountered problems abandon an on-line retail website. When the on-line customer cannot find an item or needs extra information on the item, one option currently being offered are real-time human assisted support. With these proposed on-line support applications, the number of abandoned shopping carts may be dropped, and moreover the customer can instantly receive necessary information to help him/her with the shopping decision. The idea is to create a virtual aisle on a shopping web site similar to the real aisles in a mall or department store, and customer relations management (CRM) representatives to help the web customers, who are shopping.

One approach taken by others is known as Arena Chat from Webhelp that provides "real-time human-assisted support to online customers". However, while it proposes the use of a real human, there is no indication if a customer representative is available. In addition, if a customer cannot support instant messaging (i.e. due to a firewall), there is no alternative provided for instant customer support - only email or phone support is provided.

Another option used by others is skills based routing (SBR). SBR provides routing of calls based on the skills required by the call. A computer first answers the call and asks the caller to supply information about the caller's needs. This information is matched to each agent's abilities and availability and the call is routed. Rules allow skills to be required, prioritized and weighted. Time based rules alter the calls requested skills to allow less able agents to handle a call without imposing an excessive hold time on the caller.

It would be desirable to have a method for providing on-line human support for web site customers, while providing the customer with skills based routing and real time information about the availability of such support.

### SUMMARY OF THE INVENTION

The present invention provides a system for providing customer assistance to Internet users. The invention includes an online customer support server that connects a group of customer support representatives to user of a web site to provide real time customer support. An enterprise server collects presence information from the customer support server regarding the current availability of the customer support representatives, wherein the presence information is updated at regular, specified intervals by means of SIP Publish messages. A web server provides content to the web site, which includes the presence information provided by the enterprise server, allowing online users to see in the current availability of real time customer support. If customer support representatives are not currently available, the invention provides an approximate waiting time.

The customer support representative may be designated according to skill sets, which online customers may specifically request. In one embodiment of the present invention, if the customer support representative cannot reach the customer online (e.g., due to a firewall), the customer's telephone number is provides by the web server, allowing the support personnel to contact the customer via telephone.

Cookies provide authentication as well as other information such as a telephone number if instant messaging is not available. If instant messaging available, cookies provide information about which service the customer uses, etc. Cookies are used also for skills based routing by supplying information such as the name of the customer representative who handled the customer's case previously and membership info (e.g., so the customer doesn't wait in the regular member's queue).

### BRIEF DESCRIPTION OF THE DRAWINGS

The novel features believed characteristic of the invention are set forth in the appended claims. The invention itself, however, as well as a preferred mode of use, further objectives and advantages thereof, will best be understood by reference to the following detailed description of an illustrative embodiment when read in conjunction with the accompanying drawings, wherein:
Figure 1 illustrates a system to support on-line customer relations management (CRM) service in accordance with the present invention; and

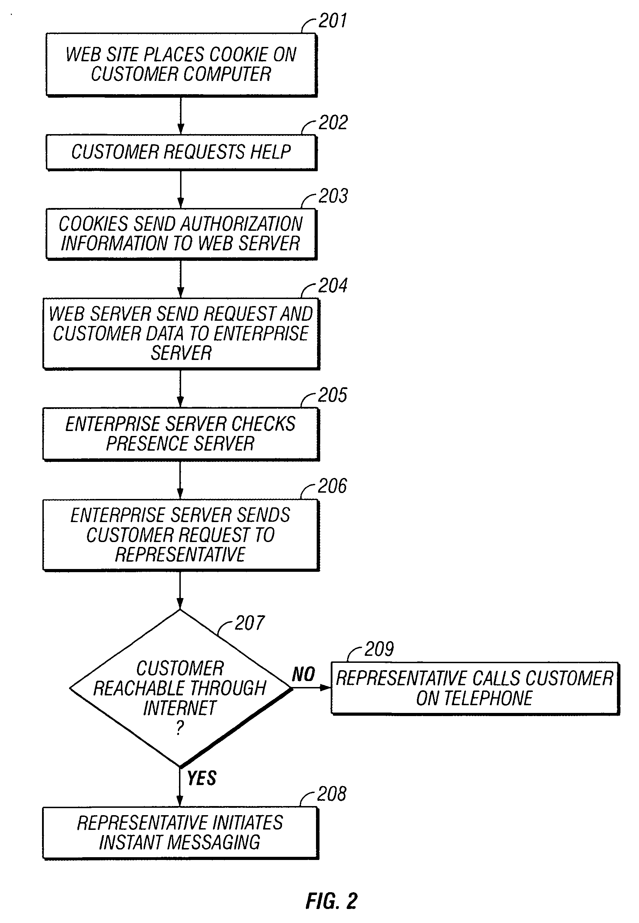

Figure 2 is a flowchart illustrating the process of initiating on-line customer service in accordance with the present invention.

### DETAILED DESCRIPTION OF THE DRAWINGS

The present invention creates virtual aisles for online shopping to instantly help customers through rich presence information during shopping. The system can be also used for on-line libraries to help information seekers to receive the information quickly.

The present invention provides customer-initiated instant support during on-line shopping or browsing in on-line libraries or bank transactions, etc. The customer knows if service representatives are available at the time of the support initiation. Information about average waiting time is displayed if representatives are not available at the time of initiating contact. If the customer support is not available through computer, the customer can be reached through different media, such as telephone. The present invention also authorizes and authenticates support initiation. Such instant customer support may increase the shopping rate and decrease the number of abandoned shopping carts due to technical difficulties.

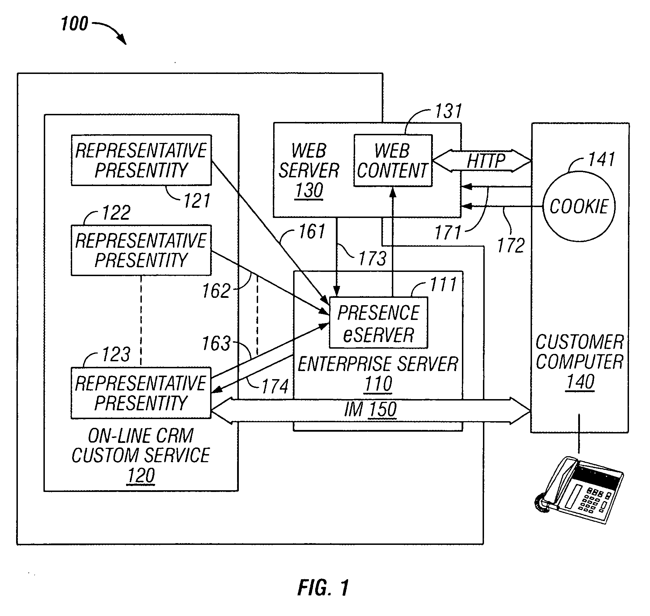

**Figure 1** illustrates a system to support on-line customer relations management (CRM) service in accordance with the present invention. The system **100** comprises multiple elements: an Enterprise Server **110**, an On-line CRM Center within customer service **120**, and a Web Server **130**. The Enterprise Server **110** includes a Presence Server **111**, which has the responsibility of presence agent, including collecting the presence information from the customer representatives.

The customer representatives **121**-**123** are contained in the On-line CRM Center **120** and are known as "presentities". A presentity is an element (person or machine) that presents its status information (e.g., available, busy, out for meal, on vacation, etc.) to the Presence Server **111**. The Representative Presentities **121**-**123** send Session Initiation Protocol (SIP) PUBLISH messages **161-163** to update their status in the Presence Server **111** within the Enterprise Server **110.** The collected information is derived from busy phone line, computer usage and manually set user states of the customer representatives. Therefore, the Presence Server 111 knows which representative is available at any given time.

The Presence Server **111** sends the presentity status information to the Web Server **130,** and the Web Server **130** populates this information in the web content **131.** The Presence Server **111** may use the Simple Object Access Protocol (SOAP)/HTTP format to send the presentity status information to the Web Server **130**.

While the customer surfs on the shopping web site, he or she may use the presentity status information to decide whether to click on a "click-for-help" button. If all the representatives are busy, the information populated on the web site may include the average waiting time according to the size of the waiting queue. The collected group rich presence information states that at least one customer representative is available to help or provides an estimated time that a customer representative will be available. The information can be provided for each skill set of customer representatives. For example, there might be a five-minute wait for gold member customer representatives but no waiting time for platinum member customer representatives. The web site posts this information for the customer to decide whether to use the instant help option.

By using "click-for-help", a routing system is provided for instant messages **150** between the client computer **140** and the customer service representatives **121**-**123** through rich presence based on skill sets.

I addition to availability or waiting time, the rich presence information for customer service representatives also includes a skill set, which may include, e.g., the competence, expertise, choice, priority, etc. The customer may route the service request to a specific customer service representative that has the highest expertise in the area. This skill set-based routing may also relate to a priority parameter of the customer, wherein a service request from the best customer, or customer with special member privileges, may be directed to a select set of highly trained customer service representatives. Moreover, if there is a queue for service, this high-priority customer may be inserted on top of the queue for the first available customer service representative in this group.

The skill set-based routing using rich presence enables the different service levels for each customer while providing the best service according to the customer's needs. Skills based routing uses cookies for mining the customer information that is required to route a call in a specific way. Customer cookies keep the previous interactions, status of the open cases, customer preferences and customer information and status, such as membership information.

**Figure 4** is a flowchart illustrating the process of initiating on-line customer service in accordance with the present invention. This method is referred to as on-line CRM service, which uses the online group presence information of the customer service department **120** to initiate authorized instant messaging **150.**
When the customer visits a shopping web site, the site places a cookie **141** on the customer computer **140** (step **201**). If the customer needs help, and the web contents **131** show that customer representatives are available, the customer can request help by clicking on the "click-for-help" button on the web site (step **202**). This request is represented by message **171** in **Figure 1.** The "click-for-help" button helps to authorize the web server **130** to initiate instant messaging **150** between the customer representative **123**, and the customer computer **140**.

In response to the request, the cookie **141** sends the necessary customer information (authorization/URI) to the web server **130** (step **203**). This information transfer is represented by authentication message **172** in **Figure 1**, which may use SOAP/HTTP format, or just HTTP.

The Web Server **130** sends the "click-to-help" request and information to the Enterprise Server **110** via message **173** (step **204**). The Enterprise Server **110** consults the Presence Server **111** to determine which customer representative in the group is available or will be available first (step **205**). The Enterprise Server forwards the customer request (via message **174**) to the available customer representative **123** (step **206**).

The customer representative then determines if the customer computer **140** can be reached through the Internet (step **207**). If so, the customer representative initiates the instant messaging **150** to the customer computer **140** (step **208**) .

If the customer is not reachable through the Internet, e.g., due to firewall, and if the computer **140** knows the phone number of the customer, this phone number can be given to the Web Server **130** during the "click-for-help" initiation in step **202**. In this case, the customer representative may initiate a telephone call to the customer (step **209**).

The description of the present invention has been presented for purposes of illustration and description, and is not intended to be exhaustive or limited to the invention in the form disclosed. Many modifications and variations will be apparent to those of ordinary skill in the art. The embodiment was chosen and described in order to best explain the principles of the invention, the practical application, and to enable others of ordinary skill in the art to understand the invention for various embodiments with various modifications as are suited to the particular use contemplated.

## Claims

1. A system for providing customer assistance to Internet users, the system comprising:
an online customer support server that connects a group of customer support representatives to user of a web site to provide real time customer support;
an enterprise server that collects presence information from the customer support server regarding current availability of customer support representatives in said group, wherein said presence information is updated at regular, specified intervals;
a web server that provides content to said web site, wherein the content includes said presence information provided by the enterprise server.

2. The system according to claim 1, wherein the customer support server updates the presence information on the enterprise server via Session Initiation Protocol Publish messages.

3. The system according to claim 1, wherein the presence information further includes approximate waiting time for customer support representatives that are not currently available.

4. The system according to claim 1, wherein customer support representatives are
designated according to skill set.

5. The system of claim 4, wherein the web server provides a user selectable option for selecting customer support representatives by skill set.

6. The system according to claim 5, wherein the system uses cookies for skills based routing, wherein the cookies are used for mining customer information that is required to route calls in a specific way.

7. The system according to claim 1, wherein, if a customer support representative cannot connect to a user online, the web server provides the user's telephone number to the customer support representative to facilitate telephone support.
